# EUROPÄISCHE PATENTSCHRIFT

(11) **EP 1 035 980 B1**
(45) Veröffentlichungstag und Bekanntmachung des Hinweises auf die Patenterteilung: **19.06.2002**
(21) Anmeldenummer: 99945948.0
(22) Anmeldetag: 09.07.1999
(51) Int. Cl.: B60H 1/32

(54) **MIT CO2 BETREIBBARE KLIMAANLAGE FÜR EIN FAHRZEUG**
CO2-OPERATED AIR CONDITIONING SYSTEM FOR A MOTOR VEHICLE
CLIMATISEUR POUVANT FONCTIONNER AU CO2 ET DESTINE A UN VEHICULE

(30) Priorität: 20.07.1998 DE 19832480
(43) Veröffentlichungstag der Anmeldung: 20.09.2000
(73) Patentinhaber: Ford-Werke Aktiengesellschaft, 50735 Köln (DE)
(72) Erfinder: DIENHART, Bernd, D-50935 Köln (DE); FISCHER, Jürgen, D-74385 Pleidelsheim (DE); KATZENBERGER, Michael, D-74336 Brackenheim (DE); KRAUSS, Hans-Joachim, D-71665 Vaihingen (DE); LOCHMAHR, Karl, D-71665 Vaihingen (DE); MITTELSTRASS, Hagen, D-71149 Bondorf (DE); STAFFA, Karl-Heinz, D-70567 Stuttgart (DE); WALTER, Christoph, D-70376 Stuttgart (DE)
(74) Vertreter: Drömer, Hans-Carsten, Dipl.-Ing.
(86) Internationale Anmeldenummer: DE9902126
(87) Internationale Veröffentlichungsnummer: WO0003882

(56) Entgegenhaltungen:
- EP-A- 0 709 630
- EP-A- 0 915 306
- WO-A-90/07683
- US-A- 3 786 651

## Beschreibung

Die Erfindung betrifft eine mit CO₂ betreibbare Klimaanlage für ein Fahrzeug mit einem an den Druckausgang eines Kompressors angeschlossenen Hochdruckabschnitt, der einen Gaskühler und einen ersten Zweig eines inneren Wärmeübertragers enthält, mit einem an den Saugeingang des Kompressors angeschlossenen Niederdruckabschnitt, der einen Verdampfer, einen Akkumulator und einen zweiten Zweig des inneren Wärmeübertragers enthält, und mit einem den Hochdruckabschnitt mit dem Niederdruckabschnitt verbindenden Expansionsorgan, wobei optimale Leistungszahlen optimalen Hochdrücken im Hochdruckabschnitt zugeordnet sind.

Bei Klimaanlagen und natürlich auch bei mit CO₂-betriebenen Klimaanlagen ist die zu erbringende Kälteleistung von der Umgebungstemperatur abhängig. Dabei wird in der Praxis angestrebt, mit möglichst optimalen Leistungszahlen, d.h. Verhältnis der Kälteleistung zu der Antriebsleistung, zu arbeiten. Es ist bekannt, daß die jeweils optimalen Leistungszahlen jeweils einem optimalen Hochdruck zugeordnet sind, d.h. bei einem für die optimale Leistungszahl optimalen Hochdruck erzielt werden. Es ist deshalb bekannt geworden, die jeweils optimalen Hochdrücke mittels eines regelbaren Expansionsventils einzuregeln. Dabei wird angestrebt, die optimalen Hochdrücke für die jeweils optimalen Leistungszahlen möglichst genau anzufahren. Dieses erfordert einen hohen Aufwand bezüglich des verstellbaren Expansionsventils, bezüglich der benötigten Hochdrucksensoren und bezüglich der Auslegung der Regelung insgesamt.

Im Stand der Technik sind Dokumente bekannt, welche die Probleme der Regelung von Kälteanlagen mit Kohlendioxid als Kältemittel behandeln. Beispielsweise in der Schrift WO 90 07683. Dort werden der transkritische Kaltdampfmaschinenprozess und die Komponenten des Kreislaufes beschrieben. Dieser Prozess gilt u.a. für Kohlendioxid als Kältemittel. Insbesondere wird die Regelung der Verdampferleistung durch die Variation des Hochdruckes, der spezifischen Enthalpie des Kältemittels am Verdampfereintritt oder der Temperatur des Kältemittels am Verdampfereintritt erwähnt.

Die theoretisch ermittelte Kälteleistungszahl wurde außerdem in zahlreichen Schriften veröffentlicht. Der theoretische Verlauf über dem Hochdruck zeigt ein von der Umgebungsbzw. Gaskühleraustritttstemperatur abhängiges stark ausgeprägtes Maximum.

Der erhöhte Aufwand von mit CO₂-betriebenen Klimaanlagen für den zusätzlichen inneren Wärmetauscher und für die Hochdruckregelung mittels eines Expansionsventils, die bei mit anderen Kältemitteln betriebenen Klimaanlagen nicht notwendig sind, führt zu einer deutlichen Verteuerung der mit CO₂-betriebenen Klimaanlagen. Obwohl CO₂ als Kältemittel wesentlich umweltfreundlicher als andere Kältemittel ist und auch sonstige Vorteile bietet und obwohl die Leistung von mit CO₂-betriebenen Klimaanlagen der Leistung von mit anderen Kältemitteln betriebenen Klimaanlagen wenigstens ebenbürdig wenn nicht sogar überlegen ist, gefährden der höhere Preis den praktischen Einsatz.

Der Erfindung liegt die Aufgabe zugrunde, eine mit CO₂ betreibbare Klimaanlage der eingangs genannten Art zu schaffen, die einen vereinfachten Aufbau und damit eine Preisreduzierung ermögicht.

Diese Aufgabe wird dadurch gelöst, daß die einzelnen Komponenten derart ausgelegt und/oder derart aufeinander abgestimmt sind, daß bei Abweichungen der Hochdrücke von den optimalen Hochdrücken von bis zu ± 30% die zugehörigen optimalen Leistungszahlen um nicht mehr als 20% verringert sind.

Versuche haben gezeigt, daß es möglich ist, eine Klimaanlage in dieser Weise auszulegen, so daß eine befriedigende Kälteleistung mit einer befriedigenden Leistungszahl erzielt wird, ohne daß eine aufwendige Hochdruckregelung erforderlich ist. Es ist dann möglich, eine wesentlich vereinfachte Regelung des Hochdrucks vorzusehen, die beispielsweise mit größeren Abstufungen arbeitet. Unter Umständen ist es sogar möglich, mit einer einzigen Festdrossel auszukommen, d.h. auf eine Regelung des Hochdrucks völlig zu verzichten.

Weitere Merkmale und Vorteile der Erfindung ergeben sich aus den Unteransprüchen und der nachfolgenden Beschreibung des in den Zeichnungen dargestellten Ausführungsbeispiels.
- Fig. 1: zeigt in einem Blockschaltbild eine mit CO₂ als Kältemittel betreibbare Klimaanlage und
- Fig. 2: ein Diagramm, das die Abweichungen der Leistungszahl von der optimalen oder maximalen Leistungszahl in Abhängigkeit von Hockdruckabweichungen darstellt.

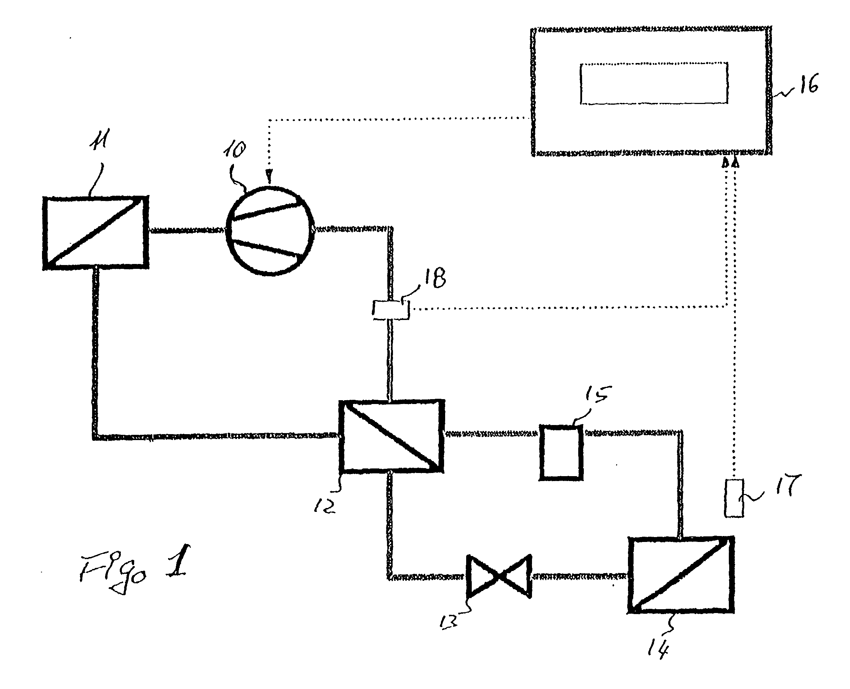

Die in Fig. 1 dargestellte Klimaanlage enthält einen regelbaren Kompressor 10, der einen isentropen Wirkungsgrad von wenigstens 0,6 und einen Liefergrad von ebenfalls wenigstens 0,6 aufweist. Das Regeln des Kompressors kann durch Ein- und Ausschalten, durch eine interne Verstellung oder durch eine Verstellung des Hubs erfolgen. An den Hochdruckausgang des Kompressors 10 schließt ein Hochdruckabschnitt an, in welchem sich ein Gaskühler 11 befindet. Der Gaskühler 11 hat einen Austauschgrad von wenigstens 0,7.

In dem Hochdruckabschnitt ist ferner ein Zweig eines inneren Wärmeübertragers 12 angeordnet. Von dem inneren Wärmeübertrager 12, der einen Austauschgrad von wenigstens 0,4 besitzt, gelangt das unter Hochdruck stehende CO₂ zu einem Expansionsorgan 13, das das CO₂ von Hochdrücken bis etwa 12 MPa oder auch 14 MPa auf Drücke von 3,5 MPa bis 5,0 MPa entspannt. Das entspannte CO₂ strömt dann in einem Niederdruckabschnitt zu einem Verdampfer 14, zu einem Akkumulator 15 und von dort durch den zweiten Zweig des inneren Wärmeübertragers 12 zu dem Sauganschluß des Kompressors 10. Der Verdampfer hat einen Austauschgrad von wenigstens 0,7. Der Akkumulator 15 besitzt ein Volumen von mehr als 40 cm³. Die Leitungen oder Schläuche des Hochdruckabschnittes besitzen einen Durchmesser von etwa 2 mm bis 8 mm. Die Leitungen oder Schläuche des Niederdruckabschnittes besitzen einen etwas größeren Durchmesser, der von 3 mm bis 10 mm betragen kann. Der Kältemittelinhalt der gesamten Klimaanlage beträgt weniger als 600 g CO₂.

Der Klimaanlage ist eine Steuereinheit 16 zugehörig, in die die Signale eines Temperatursensors 17 eingegeben werden, der dem Verdampfer 14 auf der Austrittsseite der gekühlten Luft zugeordnet ist. Ferner ist ein Drucksensor 18 vorgesehen, der den Saugdruck des Kompressors 10 erfaßt und in die Steuereinheit 16 eingibt. In die Steuereinheit 16 werden ferner die gewünschte Abkühlung der durch den Verdampfer 14 strömenden Luft und die Temperatur der Außenumgebung eingegeben. Abhängig von diesen Werten wird der Kompressor 10 geregelt.

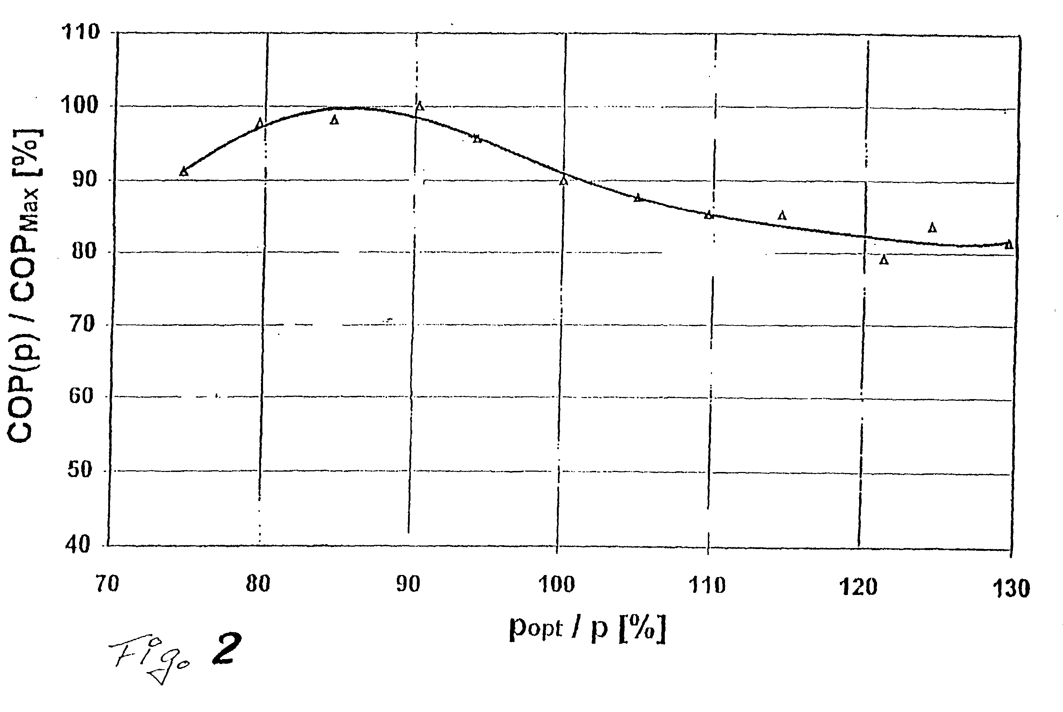

Die einzelnen Komponenten der Klimaanlage sind so ausgelegt und so aufeinander abgestimmt, daß sich die Leistungszahlen bei Abweichungen des Hochdruckes von dem optimalen Hochdruck entsprechend der Kurve nach Fig. 2 verändern, d.h. in einem relativ engen Bandbereich bleiben. Bei Abweichungen der Hochdrücke bis zu ± 30% von dem der optimalen oder maximalen Leistungszahl (COPₘₐₓ) zugehörigen optimalen Hochdruck (Pₒₚₜ) wird die Leistungszahl COP um nicht mehr als 20% verringert.

Es darf nicht unbedingt erwartet werden, daß sich die nur eine geringe Bandbreite von Abweichungen aufweisende Kurve der Leistungszahl COP über dem Hochdruck P entsprechend Fig. 2 in dieser oder ähnlicher Weise ergibt, wenn für alle Komponenten der Klimaanlage die angegebenen Mindestwerte für ihre Funktion realisiert werden. Vielmehr ist mittels Versuchen zu ermitteln, ob gegebenfalls für eine oder mehrere Komponenten höhere Werte als die Mindestwerte realisiert werden müssen, um die Komponenten aufeinander abzustimmen und die Klimaanlage so auszulegen, daß die Abweichungen der Leistungszahl COP von der maximalen oder optimalen Leistungszahl COPₘₐₓ in der gewünschten Bandbreite bleiben.

Wenn eine Klimaanlage aus ausgelegt ist, daß die Abhängigkeit der Leistungszahl COP von dem Druck P in einem Bereich ähnlich Fig. 2 liegt, so ist es möglich, das Expansionsorgan 13 als Festdrossel auszubilden, d.h. auf eine Hochdruckregelung vollständig zu verzichten. In diesem Fall genügt eine Festdrossel, deren Drosselöffnung so bemessen ist, daß der Hochdruck auf maximal 14 MPa oder gegebenenfalls auch auf geringere Werte, beispielsweise 12 MPa begrenzt ist. Es kann aber auch vorgesehen werden, daß mehrere Festdrosseln parallel geschaltet werden, die wahlweise einzeln oder gegebenenfalls auch gemeinsam zum Einsatz gebracht werden können und dabei den Hochdruck jeweils auf einen bestimmten Hochdruckbereich begrenzen. Das Ansteuern dieser Festdrosseln erfolgt dann von dem Steuergerät 16 aus beispielsweise in Abhängigkeit von dem Hochdruck oder Saugdruck und/oder der Temperatur der Umgebung. Ebenso ist es möglich, ein vereinfachtes Expansionsventil vorzusehen, dessen Drosselöffnung beispielsweise nur in Stufen veränderbar ist. In diesem Fall würde nur ein geeigneter Hochdruckbereich angesteuert, ohne eine echte Regelung des Hochdruckes vorzusehen. Auf diese Weise läßt sich eine Reduzierung der Herstellungskosten realisieren.

Durch die Erfindung wird es insgesamt möglich, die bisher von der Fachwelt für erforderlich gehaltene, aufwendige Hochdruckregelung mittels eines steuerbaren Expansionsventils und eines Hochdrucksensors zumindest wesentlich zu vereinfachen oder auf diese Regelung sogar ganz zu verzichten.

## Patentansprüche

1. Mit CO₂ betreibbare Klimaanlage für ein Fahrzeug mit einem an den Druckausgang eines Kompressors (10) angeschlossenen Hochdruckabschnitt, der einen Gaskühler (11) und einen ersten Zweig eines inneren Wärmeübertragers (12) enthält, mit einem an den Saugeingang des Kompressors (10) angeschlossenen Niederdruckabschnitt, der einen Verdampfer (14), einen Akkumulator (16) und einen zweiten Zweig des inneren Wärmeübertragers (12) enthält und mit einem den Hochdruckabschnitt mit dem Niederdruckabschnitt verbindenden Expansionsorgan (13), **dadurch gekennzeichnet, dass** der Kompressor (10) einen isentropen Wirkungsgrad von mindestens 0,6 besitzt und einen Liefergrad von wenigstens 0,6 aufweist, der Gaskühler (11) einen Austauschgrad von wenigstens 0,7 besitzt und der innere Wärmeübertrager (12) einen Austauschgrad von wenigstens 0,4 besitzt, wodurch die Leistungszahlen der Klimaanlage bei Abweichungen der Hochdrücke von den optimalen Hochdrücken von bis zu ± 30% um nicht mehr als 20% verringert werden.

2. Klimaanlage nach Anspruch 1, **dadurch gekennzeichnet, dass** das Expansionsorgan (13) als Kombination mehrerer Festdrosseln ausgebildet ist und dass ein Steuergerät (16) vorgesehen ist, welches die Festdrosseln parallel oder einzeln ansteuert.

3. Klimaanlage nach Anspruch 1, **dadurch gekennzeichnet, dass** das Expansionsorgan (13) als ein Expansionsventil mit mehreren Drosselöffnungsstufen ausgebildet ist.

4. Klimaanlage nach Anspruch 2 oder 3, **dadurch gekennzeichnet, dass** das Steuergerät (16) die Festdrosseln oder die Drosselöffnungsstufen in Abhängigkeit vom Hochdruck ansteuert und dass dazu Mittel zur Messung des Hochdruckes vorgesehen sind.

5. Klimaanlage nach Anspruch 2 oder 3, **dadurch gekennzeichnet, dass** das Steuergerät (16) die Festdrosseln oder die Drosselöffnungsstufen in Abhängigkeit vom Saugdruck ansteuert und dass dazu ein Drucksensor (18) vorgesehen ist.

6. Klimaanlage nach einem der Ansprüche 2 bis 5, **dadurch gekennzeichnet, dass** die Festdrosseln oder die Drosselöffnungsstufen in Abhängigkeit der Temperatur der Umgebung oder der Temperatur der gekühlten Luft angesteuert werden und dass dazu Temperatursensoren vorgesehen sind.

7. Klimaanlage nach Anspruch 1, **dadurch gekennzeichnet, dass** das Expansionsorgan (13) als eine Festdrossel ausgebildet ist.

8. Klimaanlage nach einem der Ansprüche 1 bis 7, **dadurch gekennzeichnet, dass** das Expansionsorgans (13) derart ausgebildet ist, dass der maximale Hochdruck auf 14 MPa begrenzt ist.

9. Klimaanlage nach einem der Ansprüche 1 bis 8, **dadurch gekennzeichnet, dass** das Expansionsorgans (13) derart ausgebildet ist, dass der maximale Hochdruck auf 12 MPa begrenzt ist.

10. Klimaanlage nach einem der Ansprüche 1 bis 9, **dadurch gekennzeichnet, dass** die Komponenten des Niederdruckabschnittes mit Leitungen und/oder Schläuchen verbunden sind, deren Innendurchmesser nicht mehr als 10 mm beträgt.

## Claims

1. Air-conditioning system which can be operated with CO₂ for a vehicle, comprising a high-pressure section which is connected to the pressure outlet of a compressor (10) and contains a gas cooler (11) and a first branch of an internal heat exchanger (12), comprising a low-pressure section which is connected to the suction inlet of the compressor (10) and which contains an evaporator (10), an accumulator (16) and a second branch of the internal heat exchanger (12), and comprising an expansion member (13) that connects the high-pressure section to the low-pressure section, **characterized in that** the compressor (10) has an isentropic efficiency of at least 0.6 and a volumetric efficiency of at least 0.6, the gas cooler (11) has a thermal efficacy of at least 0.7, and the internal heat exchanger (12) has a thermal efficacy of at least 0.4, as a result of which if the high pressures deviate by up to ±30% from the optimum high pressures, the performance figures are reduced by no more than 20%.

2. Air-conditioning system according to Claim 1, **characterized in that** the expansion member (13) is formed as a combination of a plurality of fixed restrictors, and **in that** a controller (16) is provided which drives the fixed restrictors in parallel or individually.

3. Air-conditioning system according to Claim 1, **characterized in that** the expansion member (13) is formed as an expansion valve having a plurality of throttling opening stages.

4. Air-conditioning system according to Claim 2 or 3, **characterized in that** the controller (16) drives the fixed restrictors or the throttling opening stages as a function of the high pressure, and **in that** means of measuring the high pressure are provided for this purpose.

5. Air-conditioning system according to Claim 2 or 3, **characterized in that** the controller (16) drives the fixed restrictors or the throttling opening stages as a function of the intake pressure, and **in that** a pressure sensor (18) is provided for this purpose.

6. Air-conditioning system according to one of Claims 2 to 5, **characterized in that** the fixed restrictors or the throttling opening stages are driven as a function of the temperature of the surroundings or the temperature of the cooled air, and **in that** temperature sensors are provided for this purpose.

7. Air-conditioning system according to Claim 1, **characterized in that** the expansion member (13) is formed as a fixed restrictor.

8. Air-conditioning system according to one of Claims 1 to 7, **characterized in that** the expansion member (13) is formed in such a way that the maximum high pressure is limited to 14 Mpa.

9. Air-conditioning system according to one of Claims 1 to 8, **characterized in that** the expansion member (13) is formed in such a way that the maximum high pressure is limited to 12 Mpa.

10. Air-conditioning system according to one of Claims 1 to 9, **characterized in that** the components of the low-pressure section are connected to lines and/or hoses whose internal diameter is no more than 10 mm.

## Revendications

1. Installation de climatisation pouvant fonctionner au CO₂ pour un véhicule, comprenant une section haute pression raccordée à la sortie de pression d'un compresseur (10), laquelle contient un refroidisseur de gaz (11) et une première branche d'un échangeur de chaleur interne (12), comprenant une section basse pression raccordée à l'entrée d'aspiration du compresseur (10), qui contient un évaporateur (14), un accumulateur (16) et une deuxième branche de l'échangeur de chaleur interne (12), et avec un organe de détente (13) reliant la section haute pression à la section basse pression, **caractérisée en ce que** le compresseur (10) possède un rendement isentropique d'au moins 0,6 et présente un coefficient de rendement d'au moins 0,6, le refroidisseur de gaz (11) possède un coefficient d'échange d'au moins 0,7 et l'échangeur de chaleur interne (12) possède un coefficient d'échange d'au moins 0,4, les indices de puissance de l'installation de climatisation n'étant pas réduits de plus de 20% en cas d'écartements des hautes pressions de jusqu'à ±30% par rapport aux hautes pressions optimales.

2. Installation de climatisation selon la revendication 1, **caractérisée en ce que** l'organe de détente (13) est réalisé en tant que combinaison de plusieurs soupapes d'étranglement fixes et **en ce qu'**il est prévu un appareil de commande (16) qui commande les soupapes d'étranglement fixes en parallèle ou individuellement.

3. Installation de climatisation selon la revendication 1, **caractérisée en ce que** l'organe de détente (13) est réalisé sous la forme d'une soupape de détente avec plusieurs étages d'ouvertures d'étranglement.

4. Installation de climatisation selon la revendication 2 ou 3, **caractérisée en ce que** l'appareil de commande (16) commande les soupapes d'étranglement fixes ou les étages d'ouverture d'étranglement en fonction de la haute pression et **en ce que** des moyens sont prévus à cet effet pour mesurer la haute pression.

5. Installation de climatisation selon la revendication 2 ou 3, **caractérisée en ce que** l'appareil de commande (16) commande les soupapes d'étranglement fixes ou les étages d'ouverture d'étranglement en fonction de la pression d'aspiration et **en ce qu'**il est prévu un capteur de pression (18) à cet effet.

6. Installation de climatisation selon l'une quelconque des revendications 2 à 5, **caractérisée en ce que** les soupapes d'étranglement fixes ou les étages d'ouverture d'étranglement sont commandés en fonction de la température de l'environnement ou de la température de l'air refroidi, et **en ce qu'**il est prévu des capteurs de température à cet effet.

7. Installation de climatisation selon la revendication 1, **caractérisée en ce que** l'organe de détente (13) est réalisé en tant que soupape d'étranglement fixe.

8. Installation de climatisation selon l'une quelconque des revendications 1 à 7, **caractérisée en ce que** l'organe de détente (13) est réalisé de telle sorte que la haute pression maximale soit limitée à 14 MPa.

9. Installation de climatisation selon l'une quelconque des revendications 1 à 8, **caractérisée en ce que** l'organe de détente (13) est réalisé de telle sorte que la haute pression maximale soit limitée à 12 MPa.

10. Installation de climatisation selon l'une quelconque des revendications 1 à 9, **caractérisée en ce que** les composants de la section basse pression sont connectés par des conduites et/ou des tuyaux souples, dont le diamètre intérieur ne dépasse pas 10 mm.
